# EUROPÄISCHE PATENTSCHRIFT

(11) **EP 3 049 687 B1**
(45) Veröffentlichungstag und Bekanntmachung des Hinweises auf die Patenterteilung: **08.11.2017**
(21) Anmeldenummer: 14792377.5
(22) Anmeldetag: 21.08.2014
(51) Int. Cl.: F16D 48/02

(54) **HYDRAULISCHE STEUERUNG FÜR EIN NUTZFAHRZEUG-DOPPELKUPPLUNGSGETRIEBE**
HYDRAULIC CONTROLLER FOR A DUAL-CLUTCH GEARBOX IN A UTILITY VEHICLE
COMMANDE HYDRAULIQUE DESTINÉE À UNE BOÎTE DE VITESSES À DOUBLE EMBRAYAGE DE VÉHICULE UTILITAIRE

(30) Priorität: 25.09.2013 DE 102013219253; 26.11.2013 DE 102013224059
(43) Veröffentlichungstag der Anmeldung: 03.08.2016
(73) Patentinhaber: Schaeffler Technologies AG & Co. KG, 91074 Herzogenaurach (DE)
(72) Erfinder: NISSEN, Hanjo, 25524 Itzehoe (DE); GRETHEL, Marco, 77830 Bühlertal (DE); WILLEKE, Roshan, 77855 Achern (DE)
(86) Internationale Anmeldenummer: PCT/DE2014/200417
(87) Internationale Veröffentlichungsnummer: WO 2015/043586

(56) Entgegenhaltungen:
- WO-A1-2010/127659
- DE-A1-102008 058 080
- DE-A1-102010 048 826
- DE-A1-102011 102 798

## Beschreibung

Die Erfindung betrifft eine Hydraulik bzw. eine hydraulische Steuerung oder Hydrauliksteuerung für Doppelkupplungsgetriebe von Fahrzeugen, insbesondere von Nutzfahrzeugen (NFZ), welche auch zur Betätigung und Kühlung der Kupplungen eingesetzt werden soll. DE102010048826 , DE1020111022798 und DE102008058080 offenbaren den relevanten Stand der Technik. In Nutzfahrzeugen werden bisher vorzugsweise automatisierte Schaltgetriebe eingesetzt. In konventionellen automatisierten Schaltgetrieben kommt es während des Schaltvorgangs beim Öffnen der Kupplung zu einer Zugkraftunterbrechung. In NFZ ist diese Zugkraftunterbrechung sehr störend, da sie - vor allem am Berg - zu einer Geschwindigkeitsveränderung führt. Einen entstehenden Geschwindigkeitsverlust wieder auszugleichen, kostet in der Ebene und an einer Steigung Zeit und Kraftstoff.

Verstärkt wird dieser Nachteil dadurch, dass NFZ-Motoren häufig hohe Drehmomente in einem nur schmalen Drehzahlbereich zur Verfügung stellen. Wenn durch die Zugkraftunterbrechung die Fahrgeschwindigkeit und damit auch die Motordrehzahl einbricht, befindet sich das NFZ in der nächsten Fahrstufe möglicherweise nicht mehr in dem Bereich seines Drehmomentmaximums. So verlängert sich der Beschleunigungsvorgang auf die alte Fahrgeschwindigkeit zusätzlich und es wird zusätzlicher Kraftstoff verbraucht.
Aufgabe ist es, eine hydraulische Steuerung zur Ansteuerung und Kühlung einer NFZ-Doppelkupplung bereitzustellen, welche die genannten Nachteile vermeidet. Die Kupplung soll in schweren und mittelschweren Nutzfahrzeugen im Fernverkehr, Kipper-Baustelleneinsatz und im Stadt-Verteilerverkehr einsetzbar sein und eine hohe Energieeffizienz aufweisen. Alle Gänge des Getriebes sollen lastschaltbar sein.

Die erfinderische Lösung der Aufgabe besteht in den folgenden Ansprüchen. Die Aufgabe ist bei einer Hydrauliksteuerung oder hydraulischen Steuerung für Doppelkupplungsgetriebe von Fahrzeugen mit einem Verbrennungsmotor, insbesondere von Nutzfahrzeugen (NFZ), welche zur Betätigung und Kühlung der Kupplungen einsetzbar ist, mit einer hydraulischen Energiequelle, dadurch gelöst, dass die hydraulische Energiequelle sowohl mittels des Verbrennungsmotors als auch mittels einer Elektromaschine antreibbar ist. Die erfindungsgemäße Hydrauliksteuerung ist einfach und kostengünstig herstellbar. Darüber hinaus ermöglicht die erfindungsgemäße Hydrauliksteuerung auf einfache Art und Weise die Ansteuerung und Kühlung der Doppelkupplung, insbesondere der Nutzfahrzeug-Doppelkupplung.

Ein bevorzugtes Ausführungsbeispiel der Hydrauliksteuerung ist dadurch gekennzeichnet, dass die hydraulische Energiequelle eine Hydraulikpumpe umfasst, die sowohl mittels des Verbrennungsmotors als auch mittels der Elektromaschine antreibbar ist. Das liefert den Vorteil, dass die Hydraulikpumpe so klein wie möglich gehalten werden kann. Die Pumpengröße der Hydraulikpumpe kann vorteilhaft so gewählt werden, dass die Hydraulikpumpe in einem normalen Fahrbetrieb, also vorzugsweise außerhalb von Schaltvorgängen, ausreichend Hydraulikmedium, insbesondere Öl, zur Versorgung des Grundbedarfs der Hydraulik bereitstellen kann, wobei die Hydraulikpumpe vorteilhaft nur durch den Verbrennungsmotor angetrieben wird. Die Antriebsenergie der Hydraulikpumpe wird bei einem darüber hinausgehenden Volumenstrombedarf vorteilhaft von der Elektromaschine bereitgestellt, die zu diesem Zweck als Elektromotor arbeitet.

Ein weiteres bevorzugtes Ausführungsbeispiel der Hydrauliksteuerung ist dadurch gekennzeichnet, dass die Hydraulikpumpe über ein Getriebe antriebsmäßig mit dem Verbrennungsmotor und/oder der Elektromaschine verbindbar ist. Das Getriebe ist vorteilhaft als Planetengetriebe ausgeführt. Eine mögliche Ausführungsform des Getriebes ist zum Beispiel in der deutschen Offenlegungsschrift DE 10 2008 058 080 A1 offenbart.

Ein weiteres bevorzugtes Ausführungsbeispiel der Hydrauliksteuerung ist dadurch gekennzeichnet, dass die hydraulische Energiequelle als Hauptpumpe eine mittels des Verbrennungsmotors antreibbare Hydraulikpumpe und eine zusätzliche Hydraulikpumpe umfasst, die mittels der Elektromaschine antreibbar und der Kühlung zugeordnet ist. Die durch den Verbrennungsmotor angetriebene Hauptpumpe stellt ausreichend Hydraulikmedium, wie Öl, zur Betätigung der Doppelkupplung bereit. Die zusätzliche Hydraulikpumpe, die durch die vorzugsweise als Elektromotor betriebene Elektromaschine angetrieben wird, trägt nicht zur Betätigung der Doppelkupplung bei, sondern stellt lediglich Hydraulikmedium zu Kühlzwecken bereit.

Ein weiteres bevorzugtes Ausführungsbeispiel der Hydrauliksteuerung ist dadurch gekennzeichnet, dass die hydraulische Energiequelle eine erste und eine zweite Hydraulikpumpe oder eine Hydraulikpumpe mit einer ersten und einer zweiten Pumpenflut umfasst, wobei die erste und die zweite Hydraulikpumpe/Pumpenflut über ein Getriebe antriebsmäßig mit dem Verbrennungsmotor und/oder der Elektromaschine verbindbar sind, wobei die erste Hydraulikpumpe/Pumpenflut einem Hauptzweig zugeordnet ist, wobei die zweite Hydraulikpumpe/Pumpenflut der Kühlung zugeordnet ist. Die erste Hydraulikpumpe/Pumpenflut, die sowohl über den Verbrennungsmotor als auch durch die Elektromaschine antreibbar ist, dient zur Betätigung der Doppelkupplung. Die zweite Hydraulikpumpe/Pumpenflut, die ebenfalls sowohl durch den Verbrennungsmotor als auch durch die Elektromaschine antreibbar ist, trägt nicht zur Betätigung der Doppelkupplung bei, sondern stellt lediglich Hydraulikmedium zu Kühlzwecken bereit. Das Getriebe ist vorzugsweise als Planetengetriebe ausgeführt, wie es zum Beispiel in der deutschen Offenlegungsschrift DE 10 2008 058 080 A1 offenbart ist.

Ein weiteres bevorzugtes Ausführungsbeispiel der Hydrauliksteuerung ist dadurch gekennzeichnet, dass die Hydrauliksteuerung eine Hauptdruckventileinrichtung, zwei Kupplungsdruckventile und mindestens eine Kupplungskühlung umfasst. Die Hauptdruckventileinrichtung dient dazu, einen gewünschten Hauptdruck oder Systemdruck aufrechtzuerhalten. Die Kupplungsdruckventile dienen zum Ansteuern beziehungsweise Betätigen der Kupplungsbetätigungseinrichtungen. Kupplungsbetätigungseinrichtungen sind zum Beispiel als Kupplungsbetätigungszylinder ausgeführt, die den beiden Teilkupplungen der Doppelkupplung zugeordnet sind. Die Kupplungskühlung umfasst zum Beispiel eine Saugstrahlpumpe, die dazu dient, den bereitgestellten Hydraulikdruck zu reduzieren und den zu Kühlzwecken bereitgestellten Volumenstrom zu vergrößern.

Ein weiteres bevorzugtes Ausführungsbeispiel der Hydrauliksteuerung ist dadurch gekennzeichnet, dass die Kupplungskühlung ein Kupplungskühlungsventil und eine Saugstrahlpumpe umfasst. Das Kupplungskühlungsventil ist vorzugsweise als vorgesteuertes Proportionalventil mit drei Anschlüssen und zwei definierten Endstellungen ausgeführt.

Ein weiteres bevorzugtes Ausführungsbeispiel der Hydrauliksteuerung ist dadurch gekennzeichnet, dass die Kupplungskühlung zwei Kupplungskühlungsventile und zwei Saugstrahlpumpen umfasst. Über die beiden Saugstrahlpumpen können die Teilkupplungen der Doppelkupplung separat voneinander gekühlt werden.

Ein weiteres bevorzugtes Ausführungsbeispiel der Hydrauliksteuerung ist dadurch gekennzeichnet, dass die Kupplungskühlung ein Mindestdruckventil umfasst. Ausgehend von einem durch das Mindestdruckventil aufrechterhaltenen Mindestdruck kann ein Druck eingestellt werden, der in der nachgeschalteten Saugstrahlpumpe als Treibdruck fungiert.

Ein weiteres bevorzugtes Ausführungsbeispiel der Hydrauliksteuerung ist dadurch gekennzeichnet, dass das Kupplungskühlungsventil beziehungsweise die Kupplungskühlungsventile als Druckregler, insbesondere mit einem integrierten Mindestvolumenstrom, ausgeführt ist beziehungsweise sind. Das liefert den Vorteil, dass ein Vorsteuerventil beziehungsweise zwei Vorsteuerventile entfallen kann beziehungsweise können.

Es werden drei verschiedene Hydraulikpläne einer hydraulischen Steuerung 1 zur Lösung der Aufgabe bereitgestellt, die sich durch ihr Pumpenkonzept unterscheiden. Allen Pumpenkonzepten gemeinsam ist, dass sie sowohl über eine mechanische als auch eine elektromotorische Komponente zum Pumpenantrieb verfügen.

Die Hauptfunktionen Systemdruckeinstellung, Kupplungsbetätigung und Kupplungskühlung ist bei den drei Varianten identisch und wird im Folgenden beschrieben. Die Erläuterung der unterschiedlichen Pumpenkonzepte schließt daran an.

Die beiden Kupplungen werden in allen Varianten priorisiert mit Öl versorgt. Die zur Regelung der Kupplungsdrücke vorgesehenen, direkt gesteuerten Kupplungsdruckregler VKP1 und VKP2 sind daher unmittelbar an die Hauptdruckleitung nach der Hauptpumpe 4 angeschlossen. In den Hydraulikplänen sind exemplarisch eine unbetätigt offene 21 (normally open / "no") und eine unbetätigt geschlossene 22 (normally closed / "nc") Kupplung dargestellt. Denkbar wären auch zwei unbetätigt offene oder zwei unbetätigt geschlossene Kupplungen. Zur Minimierung der Hysterese im Feinregelbereich (Anfahrten) verfügt der Druckregler VKP1 der no-Kupplung 21 vorzugsweise über eine Kennlinie mit steigendem Druckverlauf, der Druckregler VKP2 der nc-Kupplung 22 hingegen über eine Kennlinie mit fallendem Druckverlauf.

Wenn der Kupplungsdruckzweig ausreichend mit Öl versorgt ist, wird über das Vsys-Ventil überschüssiger Volumenstrom in den Kühlungszweig 7, 8, 10, 11 geleitet. Dort durchströmt das Öl zunächst jeweils einen per Bypassventil gesicherten Kühler und Filter 7 und steht dann am geschlossenen Mindestdruckventil VMD und dem Kupplungskühlungsventil VKU an. Bei dem VMD handelt es sich um ein Druckbegrenzungsventil, welches einen Mindestdruck im Kühlungszweig sicherstellt. Wenn dieser Mindestdruck erreicht ist, öffnet es und führt den überschüssigen Volumenstrom zum Sauganschluss der Pumpe. Optional ist eine Zwischenstellung des VMDs denkbar, in der es über eine zusätzliche Lamelle Kühlöl für das Getriebesteuergerät (TCU) bereitstellt (=> TCU-Kühlung).

Der Mindestdruck im Kühlungszweig ist erforderlich für die Kupplungskühlung. Über das VKU-Ventil kann ausgehend von diesem Mindestdruck ein Druck in der Kupplungskühlungsleitung eingestellt werden, der in der nachgeschalteten Saugstrahlpumpe als Treibdruck fungiert. Die Strahlpumpe wandelt den höheren Treibdruck in einen niedrigeren Druck unter Vervielfachung des Volumenstroms.

Da der Treibdruck federseitig auf das VMD rückgeführt wird, wird der Mindestdruck bei aktiver Kupplungskühlung automatisch angehoben, wodurch wiederum höhere Treibdrücke und damit höhere Kühlvolumenströme möglich sind.

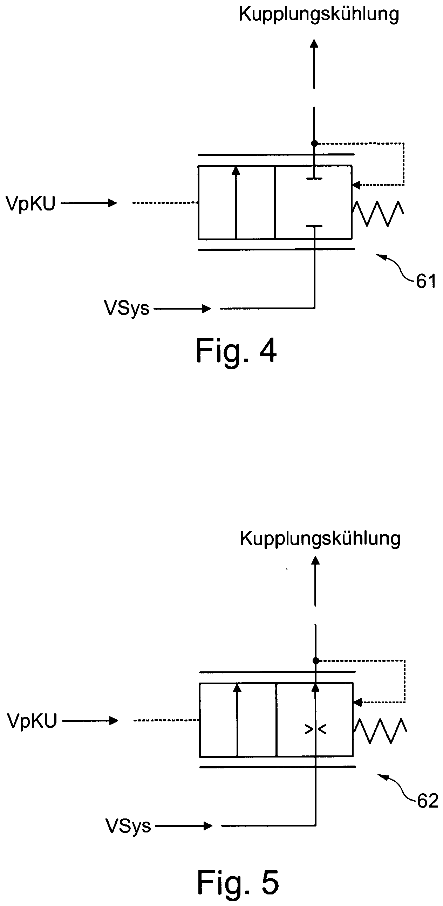

Alternativ lässt sich der Kühlungszweig anstatt der Ventilkombination VMD-VKU durch ein einzelnes Ventil in Form eines Druckreglers darstellen. Dieses Ventil bringt allerdings den Nachteil einer schlechteren Regelbarkeit bei geringen Volumenströmen mit sich. In den folgend dargestellten Hydraulikplänen ist daher die Ventilkombination VMD-VKU abgebildet, zwei Druckregler-Varianten sind den Figuren 4 und 5 dargestellt.

Für das VKU-Ventil sind aufgrund des großen Kühlölbedarfs große Ventilhübe vorgesehen. Aus diesem Grund wird dieses Ventil in den folgenden Hydraulikplänen durch das Pilotventil VpKU vorgesteuert.

Zur Minimierung der Schleppverluste kann es sinnvoll sein, die einzelnen Kupplungen separat zu kühlen. Dies würde jeweils ein weiteres VKU, VpKU und eine zweite Strahlpumpe erfordern, was in den nachstehenden Hydraulikplänen allerdings nicht dargestellt ist.

Für den Fall, dass weder die Kupplungen noch der Kühlungszweig den von der Pumpe bereitgestellten Volumenstrom abnehmen, öffnet das VRZ-Ventil, über das der überschüssige Volumenstrom zur Saugseite der Pumpe rezirkuliert, was die Energieaufnahme der Pumpe reduziert. Bei dem VRZ-Ventil handelt es sich um ein Rezirkulationsventil.

Der Abregeldruck des Vsys-Ventils und der Öffnungsdruck des VRZ-Ventils können durch eine gemeinsame Vorsteuerleitung angehoben werden. Der Vorsteuerdruck wird durch das direkt angetriebene Vpsys-Ventil eingestellt.

Grundgedanke der einzelnen Pumpenkonzepte ist, dass die Pumpengröße der mechanisch durch den Verbrennungsmotor angetriebenen Konstantpumpe so klein wie möglich gehalten wird, um die ständige Leistungsaufnahme der Pumpe so klein wie möglich zu halten. Die Pumpengröße sollte idealer Weise so gewählt werden, dass die Pumpe im normalen Fahrbetrieb (also außerhalb von Schaltvorgängen) angetrieben durch den Verbrennungsmotor ausreichend Öl zur Versorgung des Grundbedarfs der Hydraulik bereitstellen kann. Die Antriebsenergie für darüber hinaus gehenden Volumenstrombedarf soll von einem Elektromotor geliefert werden.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine erfindungsgemäße Hydrauliksteuerung mit einem Pumpenantrieb, der eine Hydraulikpumpe und ein Getriebe umfasst;
- Figur 2: eine erfindungsgemäße Hydrauliksteuerung mit einem Pumpenantrieb, der zwei Hydraulikpumpen umfasst, die unterschiedlichen Antrieben zugeordnet sind;
- Figur 3: eine erfindungsgemäße Hydrauliksteuerung mit einem Pumpenantrieb, der zwei Hydraulikpumpen oder eine Hydraulikpumpe mit zwei Pumpenfluten und ein Getriebe umfasst;
- Figur 4: ein als Druckregler ausgeführtes Kupplungskühlungsventil und
- Figur 5: ein als Druckregler mit einem integrierten Mindestvolumenstrom ausgeführtes Kupplungskühlungsventil.

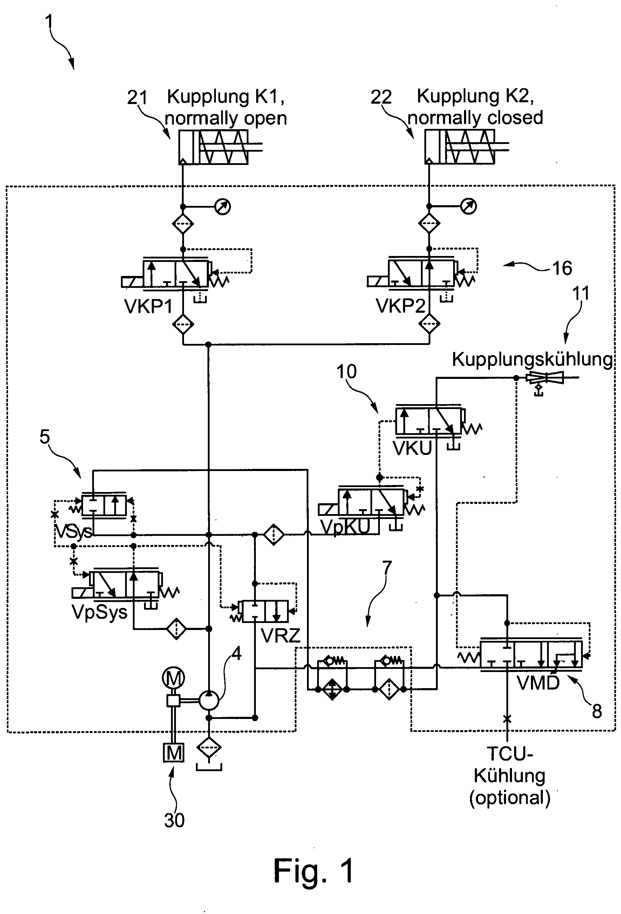

In den Figuren 1 bis 3 sind drei Ausführungsformen einer erfindungsgemäßen Hydrauliksteuerung 1 in Form von Hydraulikschaltplänen dargestellt. Zur Bezeichnung gleicher oder ähnlicher Teile werden in den Figuren 1 bis 3 die gleichen Bezugszeichen verwendet. Im Folgenden werden zunächst gemeinsame Merkmale der unterschiedlichen Ausführungsformen beschrieben. Im Anschluss daran wird nur auf die Unterschiede zwischen den einzelnen Ausführungsformen eingegangen.

Die in den Figuren 1 bis 3 in verschiedenen Ausführungsformen der Erfindung dargestellte hydraulische Steuerung 1 umfasst als Hydraulikvolumenstromquelle mindestens eine Hydraulikpumpe 4, die elektrisch und/oder mechanisch angetrieben ist. Die Hydraulikpumpe 4 saugt Hydraulikmedium, insbesondere Hydrauliköl, das verkürzt auch als Öl bezeichnet wird, aus einem Hydraulikmediumreservoir an. Das angesaugte Hydraulikmedium wird durch die Hydraulikpumpe 4 mit Druck beaufschlagt. Am Ausgang der Hydraulikpumpe 4 wird mit Hilfe einer Hauptdruckventileinrichtung 5 ein Hauptdruck oder Systemdruck eingestellt.

Die Hauptdruckventileinrichtung 5 umfasst ein Hauptdruckventil Vsys, das durch ein Pilotventil VpSys vorgesteuert ist. Der Ausgang der Hydraulikpumpe 4 ist über die Hauptdruckventileinrichtung 5 mit einer Kühl- und/oder Filtereinrichtung 7 verbindbar. Die Kühl- und/oder Filtereinrichtung 7 ist mit Bypassventilen ausgestattet und einem Kühlkreisvorspannventil VMD oder 8 vorgeschaltet. Eine Kühlventileinrichtung 10 ist der Kühl- und/oder Filtereinrichtung 7 und dem Kühlkreisvorspannventil VMD oder 8 nachgeschaltet. Die Kühlventileinrichtung 10 ist einer Kupplungskühlung 11 vorgeschaltet und umfasst ein Kühlölventil VKU mit einem Vorsteuerventil VpKU.

Der Ausgang der Hydraulikpumpe 4 steht mit einer Kupplungsdruckventileinrichtung 16 in Verbindung. Über die Kupplungsdruckventileinrichtung 16 werden eine erste Betätigungseinrichtung 21 für eine erste Kupplung und eine zweite Betätigungseinrichtung 22 für eine zweite Kupplung angesteuert. Zu diesem Zweck umfasst die Kupplungsdruckventileinrichtung 16 ein erstes Kupplungsdruckventil VKP1 und ein zweites Kupplungsdruckventil VKP2.

Der Pumpenantrieb durch Verbrennungs- und Elektromotor erfolgt in der Variante der Figur 1 über ein Summiergetriebe 30. Im ausgearbeiteten Konzept ist die Pumpenwelle mit dem Planetenträger verbunden. Der Antrieb des Hohlrades erfolgt durch den Verbrennungsmotor, der des Sonnenrades durch einen Elektromotor. Um die Pumpe 4 auch bei ausgeschaltetem Elektromotor antreiben zu können, stützt sich das Sonnenrad über einen Freilauf am Gehäuse ab. Bei höheren Volumenstromanforderungen (Kupplungsbetätigung und Kupplungskühlung) wird der Elektromotor zugeschaltet und beschleunigt den Planetenträger, und damit die Pumpe 4, auf höhere Drehzahlen.

Bei der in Figur 1 dargestellten Hydrauliksteuerung 1 umfasst die hydraulische Energiequelle nur die Hydraulikpumpe 4. Die Hydraulikpumpe 4 ist ausgangsseitig direkt mit der Kupplungsdruckventileinrichtung 16 verbunden. Die Anbindung des Kühlungszweigs 7, 8, 10, 11 erfolgt über die Hauptdruckventileinrichtung 5 beziehungsweise das VRZ-Ventil.

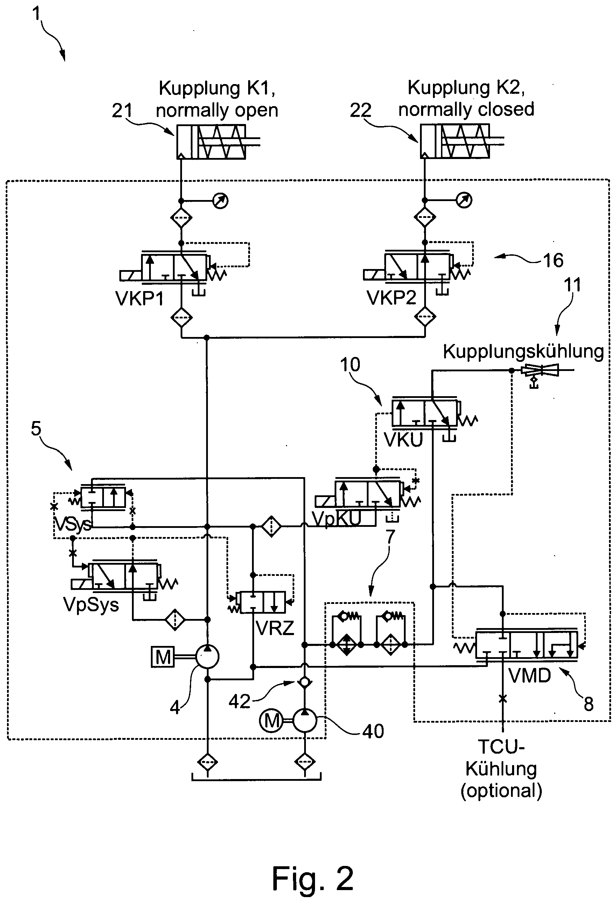

Bei dem in Figur 2 dargestellten Ausführungsbeispiel der Hydrauliksteuerung 1 umfasst die hydraulische Energiequelle als Hauptpumpe die mittels des Verbrennungsmotors antreibbare Hydraulikpumpe 4. Zusätzlich zu der Hydraulikpumpe 4 ist eine zusätzliche Hydraulikpumpe 40 vorgesehen, die mittels der Elektromaschine beziehungsweise des Elektromotors antreibbar und dem Kühlungszweig 7, 8, 10, 11 zugeordnet ist. Die zusätzliche Hydraulikpumpe 40 ist unter Zwischenschaltung eines Rückschlagventils 42 der Kühl- und/oder Filtereinrichtung 7 vorgeschaltet.

Das in Figur 2 dargestellte zweite Pumpenkonzept verzichtet auf das Summiergetriebe, wie es in der Figur 1 dargestellt ist, und hält stattdessen die zweite, vom Elektromotor angetriebene Pumpe 40 für den Kühlungszweig 7, 8, 10, 11 bereit. Dies hat den Vorteil, dass nicht das gesamte Niederdrucköl im Kühlkreis durch das energieverlustreiche Abregeln von Hochdrucköl am Vsys auf niedrige Drücke erzeugt werden muss. Abgeregelt wird nur der Teil des Hauptzweig-Volumenstroms, der zu viel erzeugt wurde.

Darüber hinaus benötigtes Kühlöl für die Kupplungen wird von der elektromotorbetriebenen Pumpe 40 bedarfsgerecht bereitgestellt. Da die zweite Pumpe 40 nur Kühlungsaufgaben übernehmen und die Hauptpumpe 4 nicht bei der Befüllung der Kupplungen unterstützen kann, muss die mechanisch vom Verbrennungsmotor angetriebene Hauptpumpe 4 größer ausfallen, als in der Variante nach Figur 1.

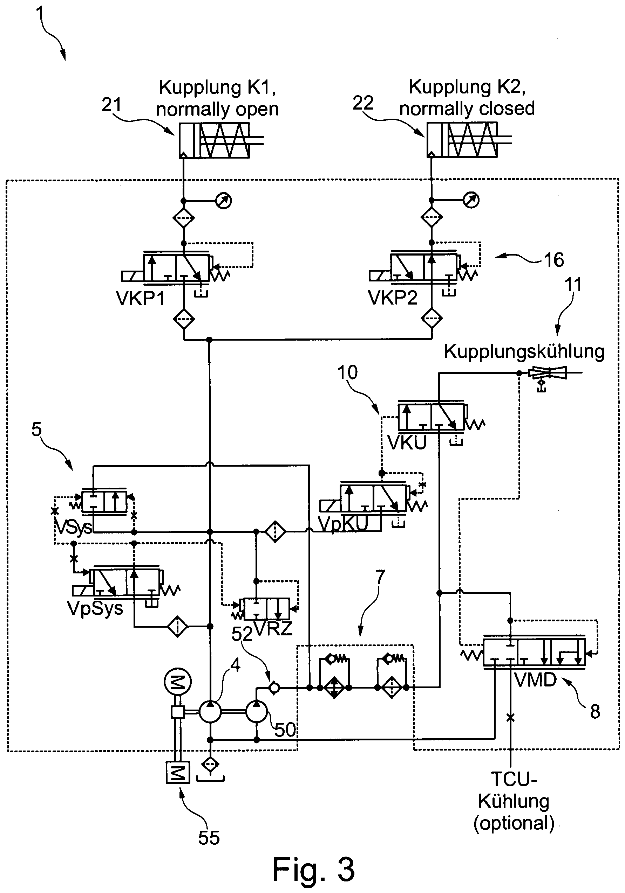

Bei dem in Figur 3 dargestellten Ausführungsbeispiel der Hydrauliksteuerung 1 stellt die Hydraulikpumpe 4 eine erste Hydraulikpumpe beziehungsweise eine erste Pumpenflut der Hydraulikpumpe 4 dar. Die Hydrauliksteuerung 1 in Figur 3 umfasst darüber hinaus eine zweite Hydraulikpumpe oder zweite Pumpenflut 50 der Hydraulikpumpe 4.

Die zweite Hydraulikpumpe beziehungsweise zweite Pumpenflut 50 ist unter Zwischenschaltung eines Rückschlagventils 52 der Kühl- und/oder Filtereinrichtung 7 vorgeschaltet. Die beiden Hydraulikpumpen oder Pumpenfluten 4, 50 sind über ein Getriebe 55 sowohl vom Verbrennungsmotor als auch vom Elektromotor antreibbar. Das Getriebe 55 ist, wie bei dem in Figur 1 dargestellten Ausführungsbeispiel der Hydrauliksteuerung 1 als Summiergetriebe ausgeführt.

Im in Figur 3 dargestellten Pumpenkonzept werden die Antriebsleistungen von Verbrennungs- und Elektromotor wieder über das Summiergetriebe 30 addiert. Die Pumpenwelle treibt im Gegensatz zur Variante der Figur 1 aber eine zweiflutige Pumpe oder zwei Pumpen 4, 50 an, von der die erste Flut 4 (oder erste Pumpe) den Hauptzweig 16 bedient und die zweite Flut 50 (oder zweite Pumpe) den Kühlungszweig 7, 8, 10, 11. Das verlustbehaftete Abregeln von Hochdrucköl für den Kühlkreis reduziert sich dadurch ähnlich wie bei der Variante nach Figur 2.

Weitere Varianten der Erfindung bestehen in:
- Erweiterung der Varianten nach den Figuren 1 - 3 um jeweils ein weiteres Kupplungskühlungsventil VKU und Vorsteuerventil VpKU sowie eine zweite Saugstrahlpumpe bei separater Kühlung der beiden Kupplungen
   sowie
- Ausführung der VKUs als Druckregler gemäß Figur 4 bzw. Ausführung der VKUs als Druckregler mit einem integrierten Mindestvolumenstrom als Permanentkühlung, wie in Figur 5 gezeigt.

In Figur 4 ist ein als Druckregler ausgeführtes Kupplungskühlungsventil 61 alleine dargestellt. Das Kupplungskühlungsventil 61 ist als Proportionalventil mit zwei Anschlüssen und zwei definierten Endstellungen ausgeführt. In der dargestellten Schließstellung des Kupplungskühlungsventils 61 ist eine Verbindung zwischen VSys und der Kupplungskühlung (11 in den Figuren 1 bis 3) unterbrochen. Durch eine Feder ist das Kupplungskühlungsventil 61 in seine dargestellte Schließstellung vorgespannt. Der Druck der Kupplungskühlung ist auf die Federseite des Kupplungskühlungsventils 61 zurückgeführt. Auf der der Feder entgegengesetzten Seite ist das Kupplungskühlungsventil 61 steuerungsmäßig mit dem Vorsteuerventil VpKU verbunden.

In Figur 5 ist ein ähnliches Kupplungskühlungsventil 62 wie in Figur 4 dargestellt. Das Kupplungskühlungsventil 62 ist im Unterschied zu dem in Figur 4 dargestellten Kupplungskühlungsventil 61 mit einem integrierten Mindestvolumenstrom ausgestattet, wie durch ein Drosselsymbol in Figur 5 angedeutet ist. Ansonsten funktioniert das Kupplungskühlungsventil 62 genauso wie das in Figur 4 dargestellte Kupplungskühlungsventil 61.

### Bezugszeichenliste

- 1: Hydrauliksteuerung
- 4: Hydraulikpumpe
- 5: Hauptdruckventileinrichtung
- 7: Kühl- und/oder Filtereinrichtung
- 8: Kühlkreisvorspannventil
- 10: Kühlventileinrichtung
- 11: Kupplungskühlung
- 16: Kupplungsdruckventileinrichtung
- 21: erste Betätigungseinrichtung
- 22: zweite Betätigungseinrichtung
- 30: Getriebe
- 40: zusätzliche Hydraulikpumpe
- 42: Rückschlagventil
- 50: zweite Hydraulikpumpe oder zweite Pumpenflut
- 52: Rückschlagventil
- 55: Getriebe
- 61: Kupplungskühlungsventil
- 62: Kupplungskühlungsventil

- Vsys: Hauptdruckventil
- VpSys: Pilotventil
- VKP1: erster Kupplungsdruckregler
- VKP2: zweiter Kupplungsdruckregler
- VKU: Kühlöffnungsventil
- VpKU: Pilotventil
- VRZ: Rezirkulationsventil

## Patentansprüche

1. Hydrauliksteuerung für Doppelkupplungsgetriebe von Fahrzeugen mit einem Verbrennungsmotor, insbesondere von Nutzfahrzeugen (NFZ), welche zur Betätigung und Kühlung der Kupplungen einsetzbar ist, mit einer hydraulischen Energiequelle, wobei die hydraulische Energiequelle sowohl mittels des Verbrennungsmotors als auch mittels einer Elektromaschine antreibbar ist und
die hydraulische Energiequelle eine Hydraulikpumpe (4) umfasst, die sowohl mittels des Verbrennungsmotors als auch mittels der Elektromaschine antreibbar ist,
**dadurch gekennzeichnet, dass** die hydraulische Energiequelle als Hauptpumpe eine mittels des Verbrennungsmotors antreibbare Hydraulikpumpe (4) und eine zusätzliche Hydraulikpumpe (40) umfasst, die mittels der Elektromaschine antreibbar und der Kühlung zugeordnet ist.

2. Hydrauliksteuerung nach Anspruch 1, **dadurch gekennzeichnet, dass** die hydraulische Energiequelle eine erste (4) und eine zweite (50) Hydraulikpumpe oder eine Hydraulikpumpe mit einer ersten (4) und einer zweiten (50) Pumpenflut umfasst, wobei die erste und die zweite Hydraulikpumpe/Pumpenflut (4,50) über ein Getriebe (55) antriebsmäßig mit dem Verbrennungsmotor und/oder der Elektromaschine verbindbar sind, wobei die erste Hydraulikpumpe/Pumpenflut (4,50) einem Hauptzweig zugeordnet ist, wobei die zweite Hydraulikpumpe/Pumpenflut (4,50) der Kühlung zugeordnet ist.

3. Hydrauliksteuerung nach einem der vorhergehenden Ansprüche, **dadurch gekennzeichnet, dass** die Hydrauliksteuerung (1) eine Hauptdruckventileinrichtung (5), zwei Kupplungsdruckventile (VKP1, VKP2) und mindestens eine Kupplungskühlung (11) umfasst.

4. Hydrauliksteuerung nach Anspruch 3, **dadurch gekennzeichnet, dass** die Kupplungskühlung (11) ein Kupplungskühlungsventil (VKU) und eine Saugstrahlpumpe umfasst.

5. Hydrauliksteuerung nach Anspruch 3, **dadurch gekennzeichnet, dass** die Kupplungskühlung zwei Kupplungskühlungsventile (VKU) und zwei Saugstrahlpumpen umfasst.

6. Hydrauliksteuerung nach Anspruch 4 oder 5, **dadurch gekennzeichnet, dass** die Kupplungskühlung (11) ein Mindestdruckventil (VMD) umfasst.

7. Hydrauliksteuerung nach Anspruch 4 oder 5, **dadurch gekennzeichnet, dass** das Kupplungskühlungsventil (11) beziehungsweise die Kupplungskühlungsventile als Druckregler, insbesondere mit einem integrierten Mindestvolumenstrom, ausgeführt ist beziehungsweise sind.

## Claims

1. Hydraulic controller for double clutch transmissions of vehicles having an internal combustion engine, in particular of commercial vehicles, which hydraulic controller can be used for actuating and cooling the clutches, having a hydraulic energy source, it being possible for the hydraulic energy source to be driven both by means of the internal combustion engine and by means of an electric machine, and the hydraulic energy source comprising a hydraulic pump (4) which can be driven both by means of the internal combustion engine and by means of the electric machine, **characterized in that** the hydraulic energy source comprises, as main pump, a hydraulic pump (4) which can be driven by means of the internal combustion engine, and an additional hydraulic pump (40) which can be driven by means of the electric machine and is assigned to the cooling means.

2. Hydraulic controller according to Claim 1, **characterized in that** the hydraulic energy source comprises a first (4) and a second (50) hydraulic pump or a hydraulic pump with a first (4) and a second (50) pump flow, it being possible for the first and the second hydraulic pump/pump flow (4, 50) to be drive-connected via a gear mechanism (55) to the internal combustion engine and/or the electric machine, the first hydraulic pump/pump flow (4, 50) being assigned to a main branch, the second hydraulic pump/pump flow (4, 50) being assigned to the cooling means.

3. Hydraulic controller according to either of the preceding claims, **characterized in that** the hydraulic controller (1) comprises a main pressure valve device (5), two clutch pressure valves (VKP1, VKP2) and at least one clutch cooling means (11).

4. Hydraulic controller according to Claim 3, **characterized in that** the clutch cooling means (11) comprises a clutch cooling valve (VKU) and a suction jet pump.

5. Hydraulic controller according to Claim 3, **characterized in that** the clutch cooling means comprises two clutch cooling valves (VKU) and two suction jet pumps.

6. Hydraulic controller according to Claim 4 or 5, **characterized in that** the clutch cooling means (11) comprises a minimum pressure valve (VMD).

7. Hydraulic controller according to Claim 4 or 5, **characterized in that** the clutch cooling valve (11) or the clutch cooling valves is/are configured as pressure regulators, in particular with an integrated minimum volumetric flow.

## Revendications

1. Commande hydraulique destinée à une boîte de vitesses à double embrayage de véhicules équipés d'un moteur à combustion interne, en particulier de véhicules utilitaires (NFZ), qui peut être utilisée pour l'actionnement et le refroidissement des embrayages, avec une source d'énergie hydraulique, dans laquelle la source d'énergie hydraulique peut être entraînée aussi bien au moyen du moteur à combustion interne qu'au moyen d'une machine électrique, et la source d'énergie hydraulique comprend une pompe hydraulique (4), qui peut être entraînée aussi bien au moyen du moteur à combustion interne qu'au moyen de la machine électrique,
**caractérisée en ce que** la source d'énergie hydraulique comprend en tant que pompe principale une pompe hydraulique (4) pouvant être entraînée au moyen du moteur à combustion interne et une pompe hydraulique additionnelle (40), qui peut être entraînée au moyen de la machine électrique et qui est associée au refroidissement.

2. Commande hydraulique selon la revendication 1,
**caractérisée en ce que** la source d'énergie hydraulique comprend une première (4) et une seconde (50) pompes hydrauliques ou une pompe hydraulique avec un premier (4) et un second (50) flux de pompe, dans laquelle la première/le premier et la seconde/le second pompes hydrauliques/flux de pompe (4, 50) peuvent être relié(e)s en entraînement par une boîte de vitesses (55) au moteur à combustion interne (1) et/ou à la machine électrique, dans laquelle la première/le premier pompe hydraulique/flux de pompe (4, 50) est associé(e) à une branche principale, dans laquelle la seconde/le second pompe hydraulique/flux de pompe (4, 50) est associé(e) au refroidissement.

3. Commande hydraulique selon l'une quelconque des revendications précédentes, **caractérisée en ce que** la commande hydraulique (1) comprend un dispositif de soupape de pression principal (5), deux soupapes de pression d'embrayage (VKP1, VKP2) et au moins un refroidissement d'embrayage (11).

4. Commande hydraulique selon la revendication 3,
**caractérisée en ce que** le refroidissement d'embrayage (11) comprend une soupape de refroidissement d'embrayage (VKU) et une pompe à jet aspirant.

5. Commande hydraulique selon la revendication 3,
**caractérisée en ce que** le refroidissement d'embrayage comprend deux soupapes de refroidissement d'embrayage (VKU) et deux pompes à jet aspirant.

6. Commande hydraulique selon la revendication 4 ou 5, **caractérisée en ce que** le refroidissement d'embrayage (11) comprend une soupape de pression minimum (VMD).

7. Commande hydraulique selon la revendication 4 ou 5, **caractérisée en ce que** la soupape de refroidissement d'embrayage (11) ou les soupapes de refroidissement d'embrayage est ou sont réalisée(s) en forme de régulateur(s) de pression, en particulier avec un courant volumique minimum intégré.
